Europäisches Patentamt

European Patent Office

Office européen des brevets

(19)

(11) **EP 1 564 660 A1**

(12) **EUROPEAN PATENT APPLICATION**

(43) Date of publication:
**17.08.2005 Bulletin 2005/33**

(51) Int Cl.⁷: **G06F 17/30**, G06K 9/46,
**G06T 7/40**

(21) Application number: **05100175.8**

(22) Date of filing: **13.01.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **22.01.2004 US 762448**<br><br>(71) Applicant: **SEIKO EPSON CORPORATION**<br>**Shinjuku-ku, Tokyo 163-0811 (JP)** | (72) Inventor: **CHEN, Jau-Yuen**<br>**94306, Palo Alto (US)**<br><br>(74) Representative: **Winter, Brandl, Fürniss, Hübner, Röss, Kaiser, Polte Partnerschaft Patent- und Rechtsanwaltskanzlei**<br>**Alois-Steinecker-Strasse 22**<br>**85354 Freising (DE)** |

(54) **Image feature set analysis of transform coefficients including color, edge and texture**

(57) An improved feature set and accompanying image-content-based management/search method/algorithm enable fast and effective searching of a collection of digital color images to identify a particular image or group of images. The feature set, which is designed for EXIF formatted thumbnail color images, is derived from select transform (e.g., DCT) coefficients of the individual color components of the searched images. The feature set comprises color features, edge features, and texture features including texture-type, texture-scale and texture-energy. The feature set of a query image is compared to the feature sets of images in the relevant search range to identify all similar images.

Fig. 1

**Description**

**BACKGROUND OF THE INVENTION**

**Field of the Invention**

The present invention relates to a feature set designed for a specifically formatted type of thumbnail image, and an image-content-based method/algorithm that employs the feature set as a tool for managing and searching an image collection. The method/algorithm of the present invention may be embodied in an apparatus such as a computer, or as a program of instructions (e.g., software) embodied on a machine-readable medium.

**Description of the Related Art**

As digital photo/image capture devices, e.g., digital cameras, scanners, camera-equipped cell phones, etc., become more popular, users are accumulating and storing more digital photos and images. As a user's collection of photos/images grows in size, it becomes more difficult to manage and locate particular items. Part of the problem is that the individual file names usually do not give much information as to the content of the photo/image nor the circumstances surrounding its taking. Thus, many approaches to managing a photo/image collection have focused on query-by-example methods in which an exemplary image is presented for purposes of comparison and the folder(s) containing the images is/are searched for images with similar visual content. Such algorithms use feature extraction and similarity measurement as the searching criteria. However, even current sophisticated feature extraction algorithms may take more than 1 second per image. Users, however, want faster results. For example, when a user uploads a new set of, say 1000, photos/images, s/he does not want to wait 20 minutes or more for results.

Currently, most modem digital cameras save information about the camera settings and picture taking conditions in the images using a standard format known as EXIF (Exchangeable Image File Format). The ISO is now working to create an international specification DCF (Design rule for Camera File system) which defines the entire file system of a digital camera, including its directory structure, file naming method, character set and file format, etc. The file format of DCF is based on the EXIF 2.1 specification which includes information such as the exact time the photo was taken, the flash setting, shutter speed, aperture, etc. Most importantly, a thumbnail image of size 160 x 120 is included in the EXIF header as a JPEG stream.

These developments have given rise to an interest in, and need for, an improved image-content-based search algorithm that employs a feature set that enables faster and more reliable search results and that takes advantage of the smaller thumbnail image size.

**OBJECTS OF THE INVENTION**

Accordingly, it is an object of the present invention to provide such an algorithm.

It is another object of this invention to provide a compressed domain feature set designed for a specifically formatted type of thumbnail image to produce a faster photo/image search algorithm.

**SUMMARY OF THE INVENTION**

According to one aspect of the present invention, a method for managing a collection of digital color images is provided. The method involves analyzing digital color images in a collection. For each digital image analyzed, the method comprises partitioning that digital color image into a plurality of blocks, each block containing a plurality of transform coefficients, and extracting a feature set derived from transform coefficients of that digital image, the feature set comprising color features, edge features, and texture features including texture-type, texture-scale and texture-energy.

Preferably, the digital color images analyzed are specifically formatted thumbnail color images.

Preferably, the partitioning step comprises partitioning each primary color component of the digital color image being analyzed. Preferably, the color and edge features comprise a separate color and edge feature for each primary color of that digital color image. The separate color features may be represented by separate histograms, one for each primary color, and the separate edge features may be likewise represented. The texture-type feature, texture-scale feature and texture-energy feature may also be represented by respective histograms.

The method can be used to search for images that are similar to a query image, which may be a new image or an image already in the collection. In the former case, the method may further comprise applying the partitioning and extracting steps to the new digital color image to be used as a query image, comparing the feature set of the query image to the feature set of each digital color image in at least a subset of the collection, and identifying each digital color image in the collection that has a feature set that is similar to the feature set of the query image.

In the case in which an image that has been previously analyzed and had a feature set extracted therefrom is used as the query image, a particular digital color image in the collection is selected as the query image. Then, the feature set of the selected query image is compared to the feature set of each digital color image in at least a subset of the collection, and each digital color image in the collection that has a feature set that is similar to the feature set of the selected query image is identified.

In another aspect, the invention involves an apparatus for performing an algorithm for managing a collection of digital images. The apparatus comprises one or more modules to perform the processing as described above with respect to the method. Each module may be implemented in software or hardware. A hardware-based module may include one or more of the following: an instruction-based processor (e.g., a central processing unit (CPU)), an Application Specific Integrated Circuit (ASIC), digital signal processing circuitry, or combination thereof. Multiple modules may be combined, as appropriate, in any implementation.

The apparatus itself may comprise a processor-controlled device, including a personal computer (e.g., desktop, laptop, etc.), a personal digital assistant (PDA), a cell phone, etc.

In accordance with further aspects of the invention, the above-described method or any of the steps thereof may be embodied in a program of instructions (e.g., software) which may be stored on, or conveyed to, a computer or other processor-controlled device for execution. Alternatively, the method or any of the steps thereof may be implemented using functionally equivalent hardware (e.g., ASIC, digital signal processing circuitry, etc.) or a combination of software and hardware.

Other objects and attainments together with a fuller understanding of the invention will become apparent and appreciated by referring to the following description and claims taken in conjunction with the accompanying drawings.

## BRIEF DESCRIPTION OF THE DRAWINGS

Fig. 1 is a schematic representation of the feature set extraction process of the invention.

Fig. 2 illustrates the transform coefficients of an 8 x 8 block of a digital image, which are analyzed in accordance with embodiments of the invention.

Fig. 3 illustrates the bin assignment of edge orientation, according to embodiments of the invention.

Fig. 4 illustrates texture types, according to embodiments of the invention.

Fig. 5 illustrates texture scales, according to embodiments of the invention.

Fig. 6 is a flow chart illustrating the operations of a management/search method/algorithm applied to stored images to obtain respective feature sets, according to embodiments of the invention.

Fig. 7 is a flow chart illustrating the operations of a management/search method/algorithm applied when a new image is uploaded for use as a search query, according to embodiments of the invention.

Fig. 8 is a flow chart illustrating the operations of a management/search method/algorithm applied when a stored image is used as the search query, according to embodiments of the invention.

Fig. 9 is a block diagram of an exemplary system which may be used to implement embodiments of the method/ algorithm of the present invention.

Fig. 10 shows a few devices in which the system of Fig. 9 may be embodied.

## DESCRIPTION OF THE PREFERRED EMBODIMENTS

This invention provides an improved feature set which is incorporated into an image-content based management/search method/algorithm that is designed to rapidly search digital images (which may be or include digital photos) for a particular image or group of images. From each digital image to be searched and from a search query image, a feature set containing specific information about that image is extracted. The feature set of the query image is then compared to the feature sets of the images in the relevant storage area(s) to identify all images that are "similar" to the query image.

In preferred embodiments, the images are EXIF formatted thumbnail color images, and the feature set is a compressed domain feature set based on this format. The feature set can be either histogram- or moment-based. In the histogram-based preferred embodiment, the feature set comprises histograms of several statistics derived from Discrete Cosine Transform (DCT) coefficients of a particular EXIF thumbnail color image, including (i) color features, (ii) edge features, and (iii) texture features, of which there are three: texture-type, texture-scale, and texture-energy, to define that image. Specifics of the feature set extraction process will now be described.

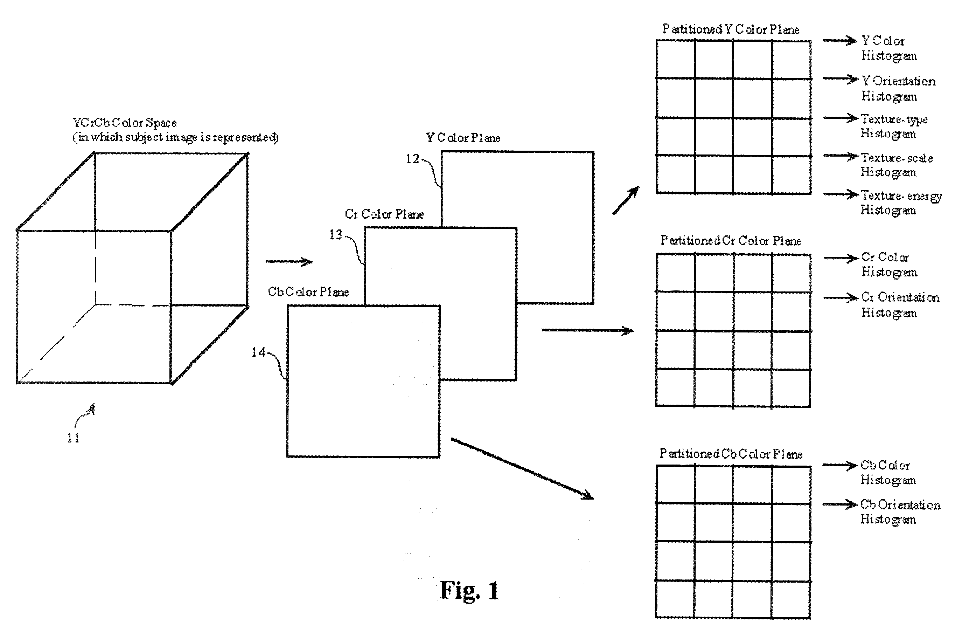

The individual color planes of a color image are each partitioned into a plurality of blocks, each containing transform coefficients, from which statistical information is derived. A schematic representation of preferred embodiments of this step is illustrated in Fig. 1. A cube 11 defines a YCrCb color space in which a subject EXIT thumbnail color image is represented. It should be noted that any color image in the folder(s) to be searched which is not in YCrCb color space may be converted from its present trichromatic color representation (e.g., RGB color) into YCrCb using a suitable appropriate known conversion before feature set extraction from that image begins.

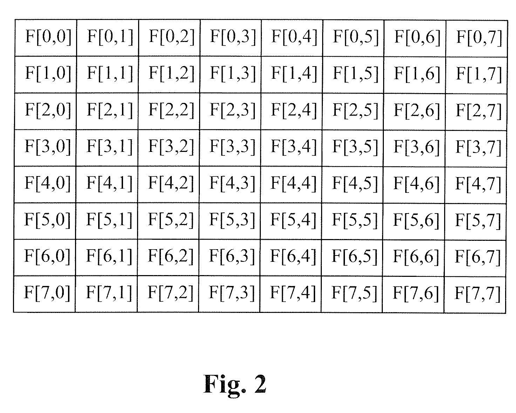

The individual Y, Cr and Cb color planes into which the subject thumbnail color image is separated are identified by reference numerals 12, 13 and 14 respectively. Each color plane is partitioned into a plurality of blocks, as indicated in Fig. 1. An EXIT thumbnail color image generally has a size of 160 x 120 or 120 x 160, in which case each color plane is preferably partitioned into 20 x 15 or 15 x 20 blocks. It should be noted that the showing of each color plane having been partitioned into only 16 blocks in Fig. 1 is for illustrative purposes only. Each block contains a plurality of transform (e.g., DCT) coefficients. In preferred embodiments, each block is 8 x 8 in size and contains 64 DCT coefficients, as illustrated in Fig. 2. Other block sizes with different numbers of transform coefficients for use with other orthogonal transforms can be accommodated with suitable modifications.

Feature set information is derived from select transform (e.g., DCT) coefficients of the blocks in the individual color planes. In preferred embodiments, information from select transform coefficients in the Y color plane is used to derive color, edge, and texture information about a subject thumbnail image, while information from select transform coefficients in each of the Cr and Cb color planes is used to derive color and edge information about such image, as schematically illustrated in Fig. 1.

With respect to color feature information, in preferred embodiments it is contained in three independent histograms, one for each of the three color components (Y, Cr and Cb) of the thumbnail image. For example, the Y component color histogram is derived from the DC coefficients of the DCT blocks of that color component. Each of the Cr and Cb color histograms is similarly derived from the DC coefficients of the DCT blocks of its color component. Note that there is one DC coefficient in each DCT block, the upper left coefficient F[0,0] in Fig. 2. Mathematically, each of the color histograms is defined as follows:

Color Histogram (from DC coefficients of the Y, Cr and Cb channels respectively):

$$h_c[m] = \sum_{i=0}^{height} \sum_{j=0}^{width} \begin{cases} 1, & Q(F_{ij}[0,0]) = m \\ 0, & otherwise \end{cases}$$

In the above equation, "m" is an integer. "$h_c[m]$" represents frequencies according to "m". "i" and "j" represent row and column numbers for blocks in the individual color planes, respectively. "height" and "width" represent maximum values of row and column numbers for blocks, respectively. Namely, each block is specified by "i" and "j". "$F_{ij}[0,0]$" represents a value of transform coefficient of position (0,0) in a block of position (ij). $Q(F_{ij}[0,0])$ is an arithmetic expression for quantizing and represents a quotient (integer part) obtained by dividing the value of "$F_{ij}[0,0]$" by a predetermined value.

For each of the three color components, a value is determined for each DCT block, and the range of values is partitioned into non-overlapping sub-ranges or bins. In one embodiment, the range is partitioned into 9 equal sub-ranges. Thus, each block is assigned to its corresponding sub-range bin, and each histogram depicts frequency (i.e., number of blocks/bin) vs. the individual bins or sub-ranges.

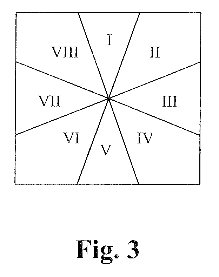

With respect to edge feature information, in preferred embodiments it is contained in orientation histograms, one for each of the three color components (Y, Cr and Cb) of the thumbnail image. To compute a particular histogram, examine transform coefficients F[0,1] and F[1,0] (see Fig. 2) in each block of the corresponding color plane. These coefficients are indicative of a significant edge. Then determine whether |F[0,1]|+|F[1,0]| is greater than a predefined threshold for that color plane. In one embodiment, the thresholds are selected as 160, 40, 40 for the Y, Cr and Cb color planes respectively. For each significant edge, the orientation is then defined by the value of F[0,1] and F[1,0]. In one embodiment, eight regions are defined, as shown in Fig. 3. More specifically, each of the orientation histograms is defined as follows:

Orientation Histogram (from DCT coefficients F[0,1] and F[1,0] of the Y, Cr and Cb channels respectively):

$$h_o[m] = \sum_{i=0}^{height} \sum_{j=0}^{width} \begin{cases} 1, & Orientation(F_{ij}[0,1], F_{ij}[1,0]) = m & and \; |F_{ij}[0,1]| + |F_{ij}[1,0]| \geq Threshold \\ 1, & m = 0 & and \; |F_{ij}[0,1]| + |F_{ij}[1,0]| < Threshold \\ 0, & otherwise \end{cases}$$

In the above equation, "$h_o[m]$" represents frequencies according to "m". Orientation ($F_{ij}[0,1], F_{ij}[1,0]$) is defined in Table 1 below.

Table 1:

| Bin assignment of Orientation | | |
|---|---|---|
| Angle | Quarter | Assigned Bin |
| \|F[0,1]/F[1,0]\|< 0.4142 | F[1,0] > 0 | I |
| | F1,0] < 0 | V |
| 0.4142 <\|F[0,1]/F[1,0]\|< 2.4142 | F[0,1] > 0<br>F[1,0] > 0 | II |
| | F[0,1] > 0<br>F[1,0] < 0 | IV |
| | F[0,1] < 0<br>F[1,0] < 0 | VI |
| | F[0,1] < 0<br>F[1,0] > 0 | VIII |
| 2.4142 <\|F[0,1]/F[1,0]\| | F[0,1] > 0 | III |
| | F[0,1] < 0 | VII |

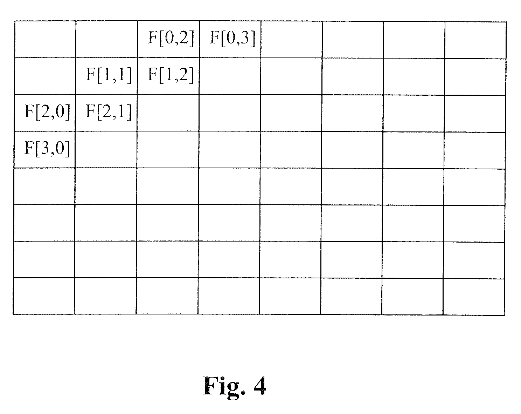

Regarding the texture feature information, in preferred embodiments it is contained in type, scale and energy histograms derived from select DCT coefficients of the Y component of the thumbnail image. The texture-type histogram is defined by the dominating coefficient among selected coefficients of a DCT block (see Fig. 4) when that coefficient is greater than a predefined threshold. In one embodiment, 10 is selected as the threshold. More specifically, the texture-type histogram is defined as follows:

Texture-type Histogram (from DCT coefficients F[0,2], F[1,1], F[2,0], F[0,3], F[1,2], F[2,1], F[3,0] of the Y channel):

$$h_t[m] = \sum_{i=0}^{height} \sum_{j=0}^{width} \begin{cases} 1 & \arg\max_k F_{ij}[Type(k)] = m & and \; |F_{ij}[0,1]| + |F_{ij}[1,0]| \geq Threshold \\ 1 & m = 0 & and \; |F_{ij}[0,1]| + |F_{ij}[1,0]| < Threshold \\ 0 & otherwise \end{cases}$$

In the above equation, "$h_t[m]$" represents frequencies according to "m". "argmax$_k$($F_{ij}[Type(k)]$)" is an arithmetic expression for determining a value of "k" when $F_{ij}[Type(k)]$ is maximum. "Type(k)" is defined in Table 2 below.

Table 2:

| Bin assignment of Texture Type | | | | | | | |
|---|---|---|---|---|---|---|---|
| k | 1 | 2 | 3 | 4 | 5 | 6 | 7 |
| Type(k) | (0,2) | (1,1) | (2,0) | (0,3) | (1,2) | (2,1) | (3,0) |

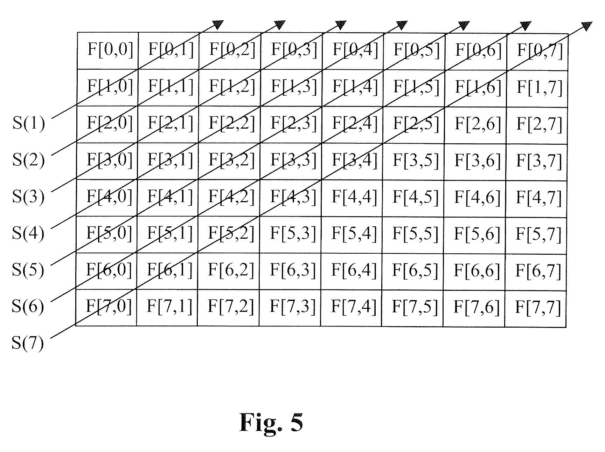

The texture-scale feature is defined by the dominating scale of coefficients of a DCT block. Fig. 5 illustrates the definition of texture-scale. In one embodiment, a threshold of 200 is chosen. More specifically, the texture-scale histogram is defined as follows:

Texture-scale Histogram (from DCT coefficients of the Y channel):

$$S_{ij}(k) = \sum_{a+b=k} F_{ij}(a,b)$$

$$h_s[m] = \sum_{i=0}^{height} \sum_{j=0}^{width} \begin{cases} 1, & \arg\max_k S_{ij}(k) = m \quad \text{and } S_{ij}(k) \geq Threshold \\ 1, & m = 0 \qquad\qquad \text{and } S_{ij}(k) < Threshold \\ 0, & otherwise \end{cases}$$

In the above equation, "a" and "b" represent row and column numbers for coefficients in each block, respectively. Namely, each transform coefficient in the block of position (ij) is specified by "a" and "b". $S_{ij}(k)$ represents the sum of some transform coefficients of positions (a,b) selected from among all transform coefficients in the block of position (i,j), wherein the sum of "a" and "b" equals to "k". "$h_s[m]$" represents frequencies according to "m". "argmax$_k S_{ij}$ (k)" is an arithmetic expression for determining a value of "k" when $S_{ij}(k)$ is maximum.

The texture-energy feature is defined by the total energy of each DCT block. More specifically, the texture-energy histogram is defined as the follows:

Texture-energy Histogram (from DCT coefficients of the Y channel):

$$E_{ij} = \sum_{a=0}^{7} \sum_{b=0}^{7} | F_{ij}(a,b) |$$

$$h_e[m] = \sum_{i=0}^{height} \sum_{j=0}^{width} \begin{cases} 1, & Q(E_{ij}) = m \\ 0, & otherwise \end{cases}$$

In the above equation, "$E_{ij}$" represents the sum of absolute values of all transform coefficients included in the block of position (i,j). "$h_e[m]$" represents frequency at "m". "$Q(E_{ij})$" is an arithmetic expression for quantizing and represents a quotient (integer part) obtained by dividing the value of "$E_{ij}$" by a predetermined value.

As has been previously shown, by using a convex distance function, a useful lower bound on the total dissimilarity measure can be formulated. With a good lower bound, a number of search algorithms to speed up the matching process for a large image collection can be applied. For this purpose, the Lp-Norm can be used. The distance between a query image and a target image is defined as the sum of $L_1$-Norm of each pair of corresponding histograms.

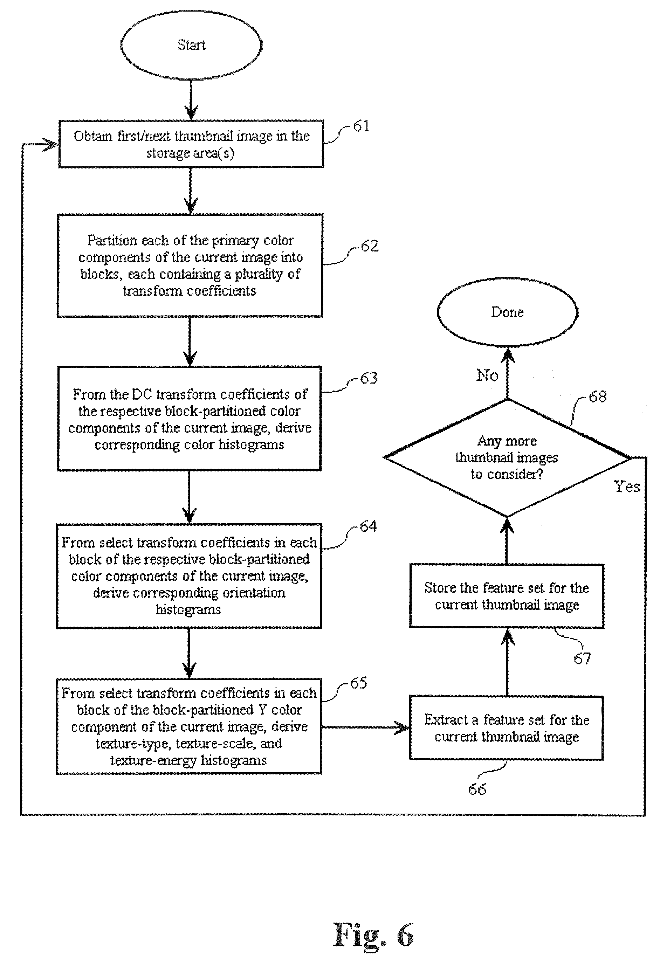

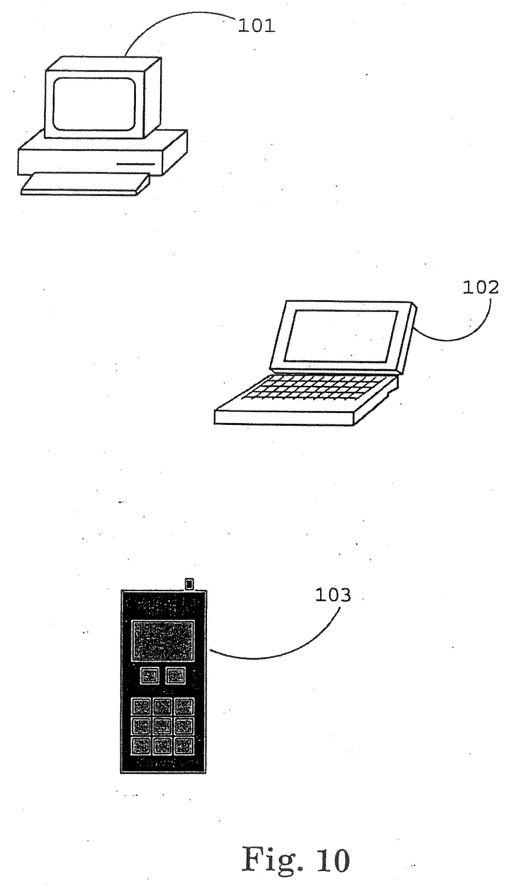

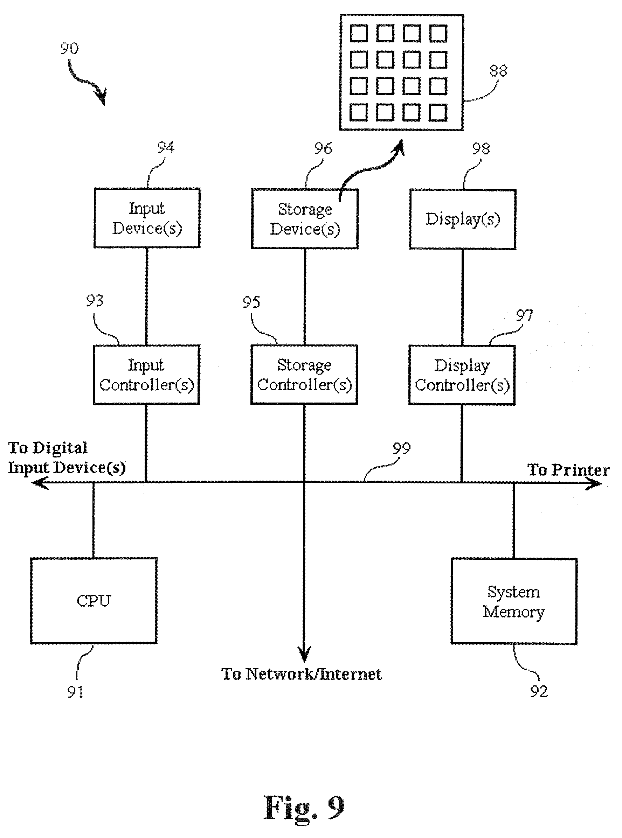

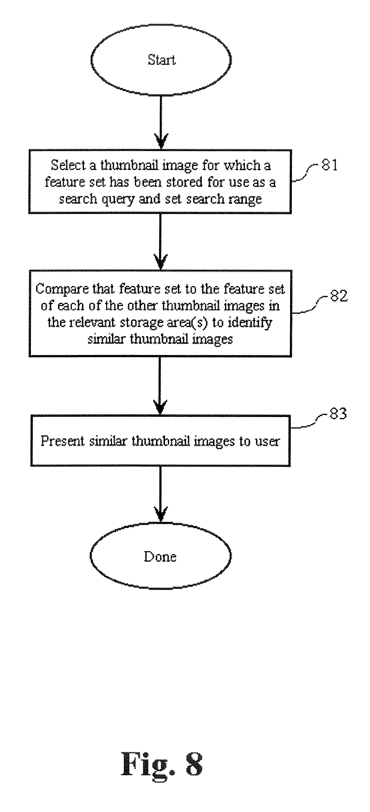

Having explained the details of determining the various histograms in which color, edge and texture information about a subject thumbnail image is contained, the operations of an image-content based management/search method/algorithm in which this information is employed will be described with reference to the flow charts of Figs. 6-8.

The flow chart of Fig. 6 illustrates the operations of the management/search method/algorithm as applied to a collection of thumbnail images currently stored in all or select storage areas on a computer system or similar device. The analysis process begins by obtaining a first thumbnail color image in the storage area(s) (step 61). Each primary color component (e.g., Y, Cr, Cb) of that image is partitioned into transform-coefficient-containing blocks as explained above (step 62). From the DC transform coefficients of the respective block-partitioned color components of that image, corresponding color histograms are derived (step 63). That is, one color histogram is obtained for each primary color component of that image.

Additional statistical information in the form of histograms is obtained in steps 64 and 65. In step 64, select transform coefficients in each block of the respective block-partitioned color components of the current image are used to derive corresponding orientation histograms as explained above. In step 65, select transform coefficients in each block of the block-partitioned Y color component of the current image are used to derive texture-type, texture-scale and texture-energy histograms.

After these histograms of statistical information about the current image represent are obtained, a feature set embodying this statistical information is extracted for the current thumbnail image (step 66). The feature set is then stored (step 67). Next, it is determined if there are any more thumbnail images to consider (step 68). If so, the algorithm loops back to step 61 where the next thumbnail image is obtained. After all images in the storage area(s) have been considered (step 68 return "no"), the algorithm ends.

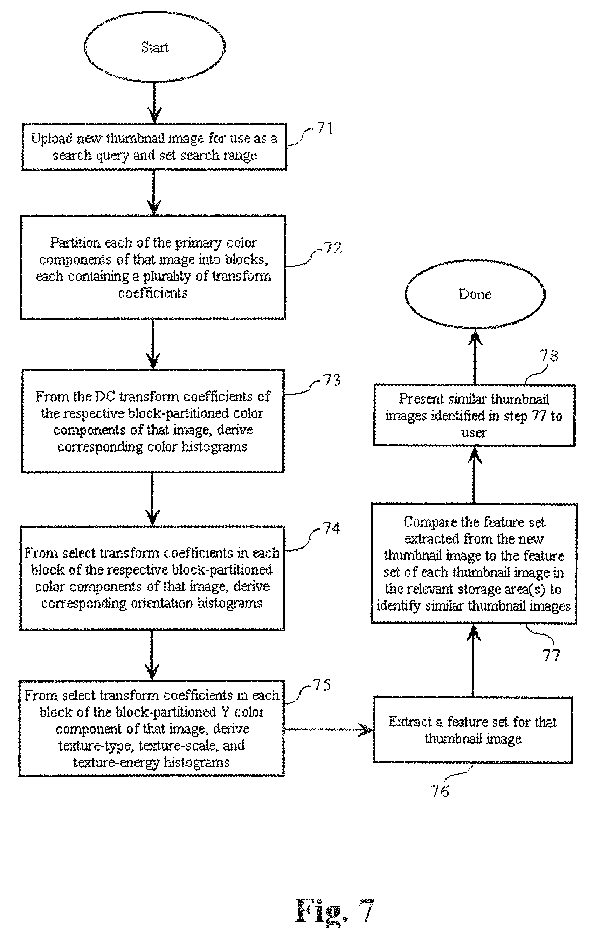

The flow chart of Fig. 7 illustrates the operations of a management/search method/algorithm when a new thumbnail color image is used as a search query to search previously stored thumbnail color images. Assuming that the processing depicted in Fig. 6 has already been performed on the images currently in the storage area(s), the method/algorithm need only extract a feature set for the new thumbnail image, search the relevant storage area(s) for similar images and present them to the user. If the user has images stored in more than one area on the computer, the search can be performed on all such areas, or the search range can be limited to select storage areas. The search range may be limited, for example, by identifying certain drives, file folders, or other data organizational structures to be searched through a control panel that appears on the screen of the user's device. The method/algorithm can be configured such that all stored thumbnail color images are searched unless a different search range is specified. Once the new thumbnail color image is uploaded and a search range is set (step 71), the processing of steps of 62-65 are performed on the new image in corresponding steps 72-75. The feature set of the new image is extracted in step 76, and that feature set is used to identify similar images in the storage area(s) in step 77. That is, the statistical information embodied in the feature set of the new image is used to identify those images having similar feature sets, using the criteria explained above. The user is then presented with all such similar images found in the storage area(s) in step 78.

It should be noted that it is not necessary to wait until all images in the relevant storage area(s) have been analyzed before identifying the "similar" ones. Steps 77 and 78 can be performed "on-the-fly," that is, similar images are presented to the user in step 78 as they are identified in step 77. In any case, after the search and analysis operations are complete, the user is presented with all images identified as similar.

The flow chart of Fig. 8 illustrates a situation in which a stored thumbnail color image, for which a feature set has already been extracted and stored, is used as the search query. A particular image of interest already stored is identified by the user in any known way, e.g., clicking on it (step 81). Having identified an image of interest to be used as the search query and set the search range, the computer or like device on which the search is to be conducted compares the feature set of the search query image to the feature set of each of the other thumbnail images in the relevant storage area(s) in step 82. Similar images are presented to the user in step 83. As previously noted with respect to Fig. 7, the comparison and presentation operations can be performed "on-the-fly."

As noted above, the management/search algorithm may be conveniently implemented in software which may be run on a computer system 90 of a type illustrated in Fig. 9. The system may be embodied in any of a variety of suitable devices including a desktop computer 101, a laptop 102, or a handheld device 103 such as a cell phone or personal digital assistant (PDA), as shown pictorially in Fig. 10.

Referring again to Fig. 9, the illustrated system includes a central processing unit (CPU) 91 that provides computing resources and controls the system. CPU 91 may be implemented with a microprocessor or the like, and may also include one or more auxiliary chips to handle certain types of processing, e.g., mathematical computations. System 90 further includes system memory 92 which may be in the form of random-access memory (RAM) and read-only memory (ROM). Such a system 90 typically includes a number of controllers and associated components, as shown in Fig. 9.

In the illustrated embodiment, input controller(s) 93 interface(s) with one or more input devices 94, such as a keyboard, mouse or stylus. The specific configurations of the input controller(s) 93 and corresponding input device (s) 94 will, of course, depend on the particular implementation of system 90.

Storage controller(s) 95 interface(s) with one or more storage devices 96 each of which includes a storage medium such as magnetic tape or disk, or an optical medium that may be used to record programs of instructions for operating systems, utilities and applications which may include embodiments of programs that implement the algorithm, or various aspects, of the present invention. Storage device(s) 96 may also contain one or more storage area(s) in which images to be searched/analyzed in accordance with the invention are stored, as schematically shown by the folder 88 containing a collection of thumbnail images. Display controller(s) 97 interface(s) with display device(s) 98 which may be of any suitable type for the particular device in which system 90 is embodied

In the illustrated system, all major system components connect to bus 99 which may represent more than one physical bus.

The images to be stored and analyzed/searched may be uploaded to the system 90 in any of a variety of ways, e.g., directly from a digital camera, from a scanner, or obtained from the Internet or other network. To this end, the system 90 preferably has appropriate communication controllers/interfaces for enabling wired or wireless uploading of images.

Moreover, depending on the particular application of the invention, the storage area(s) to be searched and/ or a program that implements the search algorithm may be accessed from a remote location (e.g., a server) over a network. The transfer of such data and instructions may be conveyed through any suitable means, including network signals, or any suitable electromagnetic carrier signal including an infrared signal.

The system may have a printer controller for interfacing with a printer for printing one or more images retrieved from a search.

While the algorithm of the present invention may be conveniently implemented with software running on an appropriate device as described above, a hardware implementation or combined hardware/software implementation of the algorithm is also possible. A hardware implementation may be realized, for example, using ASIC(s), digital signal processing circuitry, or the like. As such, the claim language "machine-readable medium" includes not only software-carrying media, but also hardware having instructions for performing the required processing hardwired thereon, as well as a combination of hardware and software. Similarly, the claim language "program of instructions" includes both software and instructions embedded on hardware. Also, the term "module" as used in the claims covers any appropriately configured processing device, such as an instruction-based processor (e.g., a CPU), ASIC, digital signal processing circuitry, or combination thereof. With these implementation alternatives in mind, it is to be understood that the figures and accompanying description provide the functional information one skilled in the art would require to write program code (i.e., software) or to fabricate circuits (i.e., hardware) to perform the processing required.

As the foregoing description demonstrates, the present invention provides an feature set designed for a thumbnail image format (preferably an EXIF thumbnail image format) that can be employed in an image-content-based management/search algorithm for fmding select images/photos in a large collection. While the invention has been described in conjunction with several specific embodiments, many further alternatives, modifications, variations and applications will be apparent to those skilled in the art that in light of the foregoing description. Thus, the invention described herein is intended to embrace all such alternatives, modifications, variations and applications as may fall within the spirit and scope of the appended claims.

**Claims**

1. A method for managing a collection of digital color images, comprising the steps of:

    analyzing digital color images in the collection, and for each digital color image analyzed

       partitioning that digital color image into a plurality of blocks, each block containing a plurality of transform coefficients, and

       extracting a feature set derived from transform coefficients of that digital color image, the feature set comprising color features, edge features, and texture features including texture-type, texture-scale and texture-energy.

2. A method as recited in claim 1, wherein the digital color images analyzed are specifically formatted thumbnail color images.

3. A method as recited in claim 1 or 2, wherein the partitioning step comprises partitioning each primary color component of the digital color image being analyzed, and the color features comprise a separate color feature for each primary color of that digital color image.

4. A method as recited in claim 3, wherein the separate color features are represented by separate histograms, one for each primary color.

5. A method as recited in any one of claims 1 through 4, wherein the partitioning step comprises partitioning each primary color component of the digital color image being analyzed, and the edge features comprise a separate edge feature for each primary color of that digital color image.

6. A method as recited in claim 5, wherein the separate edge features are represented by separate histograms, one for each primary color.

7. A method as recited in any one of claims 1 through 6, wherein the texture-type feature, texture-scale feature and texture-energy feature are represented by respective histograms.

8. A method as recited in any one of claims 1 through 7, further comprising the steps of:

applying the partitioning and extracting steps to a new digital color image to be used as a query image;

comparing the feature set of the query image to the feature set of each digital color image in at least a subset of the collection; and

identifying each digital color image in the collection that has a feature set that is similar to the feature set of the query image.

9. A method as recited in any one of claims 1 through 7, further comprising the steps of:

selecting a particular digital color image in the collection as a query image; and

comparing the feature set of the selected query image to the feature set of each digital color image in at least a subset of the collection; and

identifying each digital color image in the collection that has a feature set that is similar to the feature set of the selected query image.

10. An apparatus for performing an algorithm for managing a collection of digital color images, the apparatus comprising:

a module configured to partition each digital color image to be analyzed into a plurality of blocks, each block containing a plurality of transform coefficients, and

a module configured to extract a feature set derived from transform coefficients of that digital color image, the feature set comprising color features, edge features, and texture features including texture-type, texture-scale and texture-energy.

11. An apparatus as recited in claim 10, wherein the digital color images analyzed are specifically formatted thumbnail color images.

12. An apparatus as recited in claim 10 or 11, wherein the partition module is configured to partition each primary color component of the digital color image being analyzed, and the color features comprise a separate color feature for each primary color of that digital color image.

13. An apparatus as recited in claim 12, wherein the separate color features are represented by separate histograms, one for each primary color.

14. An apparatus as recited in any one of claims 10 through 13, wherein the partition module is configured to partition each primary color component of the digital color image being analyzed, and the edge features comprise a separate edge feature for each primary color of that digital color image.

15. An apparatus as recited in claim 14, wherein the separate edge features are represented by separate histograms, one for each primary color.

16. An apparatus as recited in any one of claims 10 through 15, wherein the texture-type feature, texture-scale feature and texture-energy feature are represented by respective histograms.

17. An apparatus as recited in any one of claims 10 through 16, further comprising:

a module configured to select a digital color image as a query image;

a module configured to compare the feature set of the selected query image to the feature set of each digital color image in at least a subset of the collection; and

a module configured to identify each digital color image in the collection that has a feature set that is similar to the feature set of the selected query image.

**18.** An apparatus as recited in any one of claims 10 through 17, wherein the apparatus comprises a processor-controlled device.

**19.** An apparatus as recited in claim 18, wherein the processor-controlled device comprises a personal computer, a personal digital assistant, or a cell phone.

**20.** A machine-readable medium having a program of instructions for directing a machine to perform an algorithm for managing a collection of digital color images, the program of instructions comprising:

instructions for analyzing digital color images in the collection, and for each digital color image analyzed

instructions for partitioning that digital color image into a plurality of blocks, each block containing a plurality of transform coefficients, and

instructions for extracting a feature set derived from transform coefficients of that digital color image, the feature set comprising color features, edge features, and texture features including texture-type, texture-scale and texture-energy.

**21.** A machine-readable medium as recited in claim 20, wherein the digital color images analyzed are specifically formatted thumbnail color images.

**22.** A machine-readable medium as recited in claim 20 or 21, wherein the partitioning instructions comprises instructions for partitioning each primary color component of the digital color image being analyzed, and the color features comprise a separate color feature for each primary color of that digital color image.

**23.** A machine-readable medium as recited in claim 22, wherein the separate color features are represented by separate histograms, one for each primary color.

**24.** A machine-readable medium as recited in any one of claims 20 through 23, wherein the partitioning instructions comprises instructions for partitioning each primary color component of the digital color image being analyzed, and the edge features comprise a separate edge feature for each primary color of that digital color image.

**25.** A machine-readable medium as recited in claim 24, wherein the separate edge features are represented by separate histograms, one for each primary color.

**26.** A machine-readable medium as recited in any one of claims 20 through 25, wherein the texture-type feature, texture-scale feature and texture-energy feature are represented by respective histograms.

**27.** A machine-readable medium as recited in any one of claims 20 through 26, the program of instructions further comprising:

instructions for applying the partitioning and extracting steps to a new digital color image to be used as a query image;

instructions for comparing the feature set of the query image to the feature set of each digital color image in at least a subset of the collection; and

instructions for identifying each digital color image in the collection that has a feature set that is similar to the feature set of the query image.

**28.** A machine-readable medium as recited in any one of claims 20 through 26, the program of instructions further comprising:

instructions for selecting a particular digital color image in the collection as a query image; and

instructions for comparing the feature set of the selected query image to the feature set of each digital color image in at least a subset of the collection; and

instructions for identifying each digital color image in the collection that has a feature set that is similar to the feature set of the selected query image.

Fig. 1

| F[0,0] | F[0,1] | F[0,2] | F[0,3] | F[0,4] | F[0,5] | F[0,6] | F[0,7] |
|--------|--------|--------|--------|--------|--------|--------|--------|
| F[1,0] | F[1,1] | F[1,2] | F[1,3] | F[1,4] | F[1,5] | F[1,6] | F[1,7] |
| F[2,0] | F[2,1] | F[2,2] | F[2,3] | F[2,4] | F[2,5] | F[2,6] | F[2,7] |
| F[3,0] | F[3,1] | F[3,2] | F[3,3] | F[3,4] | F[3,5] | F[3,6] | F[3,7] |
| F[4,0] | F[4,1] | F[4,2] | F[4,3] | F[4,4] | F[4,5] | F[4,6] | F[4,7] |
| F[5,0] | F[5,1] | F[5,2] | F[5,3] | F[5,4] | F[5,5] | F[5,6] | F[5,7] |
| F[6,0] | F[6,1] | F[6,2] | F[6,3] | F[6,4] | F[6,5] | F[6,6] | F[6,7] |
| F[7,0] | F[7,1] | F[7,2] | F[7,3] | F[7,4] | F[7,5] | F[7,6] | F[7,7] |

# Fig. 2

**Fig. 3**

| | | F[0,2] | F[0,3] | | | | |
|---|---|---|---|---|---|---|---|
| | F[1,1] | F[1,2] | | | | | |
| F[2,0] | F[2,1] | | | | | | |
| F[3,0] | | | | | | | |
| | | | | | | | |
| | | | | | | | |
| | | | | | | | |
| | | | | | | | |

**Fig. 4**

| | F[0,0] | F[0,1] | F[0,2] | F[0,3] | F[0,4] | F[0,5] | F[0,6] | F[0,7] |
| --- | --- | --- | --- | --- | --- | --- | --- | --- |
| | F[1,0] | F[1,1] | F[1,2] | F[1,3] | F[1,4] | F[1,5] | F[1,6] | F[1,7] |
| S(1) | F[2,0] | F[2,1] | F[2,2] | F[2,3] | F[2,4] | F[2,5] | F[2,6] | F[2,7] |
| S(2) | F[3,0] | F[3,1] | F[3,2] | F[3,3] | F[3,4] | F[3,5] | F[3,6] | F[3,7] |
| S(3) | F[4,0] | F[4,1] | F[4,2] | F[4,3] | F[4,4] | F[4,5] | F[4,6] | F[4,7] |
| S(4) | F[5,0] | F[5,1] | F[5,2] | F[5,3] | F[5,4] | F[5,5] | F[5,6] | F[5,7] |
| S(5) | F[6,0] | F[6,1] | F[6,2] | F[6,3] | F[6,4] | F[6,5] | F[6,6] | F[6,7] |
| S(6) | F[7,0] | F[7,1] | F[7,2] | F[7,3] | F[7,4] | F[7,5] | F[7,6] | F[7,7] |
| S(7) | | | | | | | | |

**Fig. 5**

Fig. 6

101

102

103

Fig. 10

**Fig. 9**

```
                    ┌──────────────┐
                    │    Start     │
                    └──────┬───────┘
                           │
                           ▼
        ┌──────────────────────────────────┐
        │  Select a thumbnail image for     │  ─ 81
        │  which a feature set has been      │
        │  stored for use as a               │
        │  search query and set search range │
        └──────────────┬────────────────────┘
                       │
                       ▼
        ┌──────────────────────────────────┐
        │  Compare that feature set to the   │  ─ 82
        │  feature set of each of the other  │
        │  thumbnail images in the relevant  │
        │  storage area(s) to identify       │
        │  similar thumbnail images          │
        └──────────────┬────────────────────┘
                       │
                       ▼
        ┌──────────────────────────────────┐
        │  Present similar thumbnail images  │  ─ 83
        │  to user                           │
        └──────────────┬────────────────────┘
                       │
                       ▼
                ┌──────────────┐
                │     Done     │
                └──────────────┘
```

# Fig. 8

Start

Upload new thumbnail image for use as a search query and set search range — 71

Partition each of the primary color components of that image into blocks, each containing a plurality of transform coefficients — 72

From the DC transform coefficients of the respective block-partitioned color components of that image, derive corresponding color histograms — 73

From select transform coefficients in each block of the respective block-partitioned color components of that image, derive corresponding orientation histograms — 74

From select transform coefficients in each block of the block-partitioned Y color component of that image, derive texture-type, texture-scale, and texture-energy histograms — 75

Extract a feature set for that thumbnail image — 76

Compare the feature set extracted from the new thumbnail image to the feature set of each thumbnail image in the relevant storage area(s) to identify similar thumbnail images — 77

Present similar thumbnail images identified in step 77 to user — 78

Done

**Fig. 7**

**European Patent Office**

**EUROPEAN SEARCH REPORT**

Application Number

EP 05 10 0175

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WENG ZU MAO ET AL: "Integrating visual ontologies and wavelets for image content retrieval" DATABASE AND EXPERT SYSTEMS APPLICATIONS, 1998. PROCEEDINGS. NINTH INTERNATIONAL WORKSHOP ON VIENNA, AUSTRIA 26-28 AUG. 1998, LOS ALAMITOS, CA, USA,IEEE COMPUT. SOC, US, 26 August 1998 (1998-08-26), pages 379-384, XP010296729 ISBN: 0-8186-8353-8 * the whole document * ----- | 1-28 | G06F17/30 G06K9/46 G06T7/40 |
| X | US 2002/018594 A1 (XU PENG ET AL) 14 February 2002 (2002-02-14)<br><br>* paragraph [0003] - paragraph [0041] * * paragraph [0049] - paragraph [0061] * * paragraph [0071] * ----- | 1,2, 8-11, 17-21, 27,28 | |
| A | DUMITRA A ET AL: "On the application of parametric snake models to the localization of object boundaries in color images" MULTIMEDIA SIGNAL PROCESSING, 2001 IEEE FOURTH WORKSHOP ON OCTOBER 3-5, 2001, PISCATAWAY, NJ, USA,IEEE, 3 October 2001 (2001-10-03), pages 167-172, XP010565770 ISBN: 0-7803-7025-2 * page 168, line 9 - line 39 * ----- -/-- | 4,13,23 | **TECHNICAL FIELDS SEARCHED (Int.Cl.7)**<br><br>G06F G06K G06T H04N |

The present search report has been drawn up for all claims

| Place of search | Date of completion of the search | Examiner |
|---|---|---|
| Munich | 3 June 2005 | McGrath, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 564 660 A1

**European Patent Office**

## EUROPEAN SEARCH REPORT

Application Number

EP 05 10 0175

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ZE-NIAN LI ET AL: "C-BIRD: content-based image retrieval from digital libraries using illumination invariance and recognition kernel" DATABASE AND EXPERT SYSTEMS APPLICATIONS, 1998. PROCEEDINGS. NINTH INTERNATIONAL WORKSHOP ON VIENNA, AUSTRIA 26-28 AUG. 1998, LOS ALAMITOS, CA, USA,IEEE COMPUT. SOC, US, 26 August 1998 (1998-08-26), pages 361-366, XP010296728 ISBN: 0-8186-8353-8 * the whole document * ----- | 1-28 | |
| A | US 6 584 221 B1 (MOGHADDAM BABACK ET AL) 24 June 2003 (2003-06-24) * the whole document * ----- | 1-28 | |
| A | EP 1 102 180 A (STMICROELECTRONICS S.R.L) 23 May 2001 (2001-05-23) * the whole document * ----- | 1-28 | |
| A | US 6 243 713 B1 (NELSON PAUL E ET AL) 5 June 2001 (2001-06-05) * the whole document * ----- | 1-28 | TECHNICAL FIELDS SEARCHED (Int.Cl.7) |
| A | HADJIDEMETRIOU E ET AL: "Spatial information in multiresolution histograms" PROCEEDINGS 2001 IEEE CONFERENCE ON COMPUTER VISION AND PATTERN RECOGNITION. CVPR 2001. KAUAI, HAWAII, DEC. 8 - 14, 2001, PROCEEDINGS OF THE IEEE COMPUTER CONFERENCE ON COMPUTER VISION AND PATTERN RECOGNITION, LOS ALAMITOS, CA, IEEE COMP. SOC, US, vol. VOL. 1 OF 2, 8 December 2001 (2001-12-08), pages 702-709, XP010583813 ISBN: 0-7695-1272-0 * the whole document * ----- | 1-28 | |

The present search report has been drawn up for all claims

| Place of search | Date of completion of the search | Examiner |
|---|---|---|
| Munich | 3 June 2005 | McGrath, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 564 660 A1**

## ANNEX TO THE EUROPEAN SEARCH REPORT
## ON EUROPEAN PATENT APPLICATION NO.

EP 05 10 0175

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2005

| Patent document cited in search report | | Publication date | Patent family member(s) | | Publication date |
|---|---|---|---|---|---|
| US 2002018594 | A1 | 14-02-2002 | US | 6763069 B1 | 13-07-2004 |
| | | | JP | 2003153192 A | 23-05-2003 |
| | | | CN | 1337828 A | 27-02-2002 |
| | | | EP | 1170679 A2 | 09-01-2002 |
| | | | JP | 2002077906 A | 15-03-2002 |
| US 6584221 | B1 | 24-06-2003 | NONE | | |
| EP 1102180 | A | 23-05-2001 | IT | T0990996 A1 | 16-05-2001 |
| | | | EP | 1102180 A1 | 23-05-2001 |
| | | | JP | 3481911 B2 | 22-12-2003 |
| | | | JP | 2001195592 A | 19-07-2001 |
| US 6243713 | B1 | 05-06-2001 | NONE | | |

For more details about this annex : see Official Journal of the European Patent Office, No. 12/82